# EUROPEAN PATENT APPLICATION

(11) **EP 1 919 089 A2**
(43) Date of publication of application: **07.05.2008**
(21) Application number: 07118160.6
(22) Date of filing: 09.10.2007
(51) Int. Cl.: H04B 1/38, H04B 7/15

(54) **Switchable transceiver for relay station**

(30) Priority: 06.11.2006 US 864483; 27.03.2007 US 691785
(71) Applicant: Fujitsu Ltd., Kawasaki-shi, Kanagawa 211-8588 (JP)
(72) Inventor: Viorel, Dorin c/o FUJITSU LIMITED,, Kawasaki-shi, Kanagawa 211-8588 (JP); Gilbertson, Chad c/o FUJITSU LIMITED,, Kawasaki-shi, Kanagawa 211-8588 (JP); Sukiasyan, Aram c/o FUJITSU LIMITED,, Kawasaki-shi, Kanagawa 211-8588 (JP)
(74) Representative: Wilding, Frances Ward

(57) **Abstract**

A transceiver which includes amplifier operating as a power amplifier when amplifying a signal to be transmitted by the transceiver and as a low-noise amplifier when amplifying a signal received by the transceiver, and switching circuitry switchable to a first configuration in which the amplifier operates as a power amplifier, and to a second configuration in which the amplifier operates as a low-noise amplifier. The transceiver can be used in a relay station, or other station, operating in an Orthogonal Frequency Division Multiple Access (OFDMA) network. A method includes determining whether a station operating in an OFDMA network is to transmit a signal or receive a signal and providing the signal to an amplifier in the station so that the amplifier operates as a power amplifier or a low-noise amplifier based on the determination.

## Description

### CROSS-REFERENCE TO RELATED APPLICATIONS

The present application claims priority to provisional application titled "Switched Front End RF Transceiver Architecture for Relay Stations Operating in Mobile WiMAX Networks", serial number 60/864,483, filed November 6, 2006, inventors Aram Sukiasyan, Chad Gilbertson, and Dorin Viorel, attorney docket number 1974.1006P, and which is incorporated herein by reference.

### BACKGROUND OF THE INVENTION

### Description of the Related Art

Wireless communication networks have become increasingly popular and generally include a base station that provides service to a cell area located around the base station. Mobile stations (such as cell phones, etc.) are able to communicate with the base station when they are within the service area of the base station. In certain types of wireless communication networks, such as, for example, those based on the Institute of Electrical and Electronics Engineers (IEEE) 802.16 standard, "last mile" connectivity of mobile stations within the network is the focus.

However, in wireless communication networks, due to such effects as shadowing arising from blockage by buildings and other obstructions between transmission/reception antennas, there exist dead zones in which communication with the base station is not possible, despite being within the service area. To combat this problem, in an Orthogonal Frequency Division Multiple Access (OFDMA) network, relay stations are employed for providing enhanced transmission capabilities by acting as intermediaries between mobile stations operating in the network and the base station. In this manner, a mobile station that is incapable of connecting directly to a base station within its cell service area may still connect indirectly to the base station by first communicating with a relay station that does have a direct link, or possibly an indirect link, to the base station.

Each relay station is provided with a hardware architecture for transmitting and receiving signals to and from other stations within the network. To this end, each relay station is generally provided with a two-radio transceiver with a separate power amplifier acting to amplify a signal to be transmitted by the transceiver and a separate low-noise amplifier acting to amplify a signal received by the transceiver. As such, the transceiver is required to be switched frequently between a transmit state and a receive state during a single OFDMA frame operation. However, this causes a problem because, since it is necessary for the separate amplifiers to power ON and OFF during the switching between these two states, the switching time of the transceiver can take up a significant portion of the time allocated for the frame. Furthermore, a relay station transmitting and receiving concurrently may be subject to high levels of local interference.
There is also a disadvantage in that it is expensive to provide such a two-radio transceiver system.

The invention is defined in the independent claims, to which reference should now be made. Advantageous embodiments are set out in the sub claims. Various embodiments of the present invention provide a transceiver which includes an amplifier operating as a power amplifier when amplifying a signal to be transmitted by the transceiver and as a low-noise amplifier when amplifying a signal received by the transceiver and switching circuitry switchable to a first configuration in which a signal to be transmitted by the transceiver is provided to the amplifier so that the amplifier operates as a power amplifier to amplify the signal before being transmitted, and to a second configuration in which a signal received by the transceiver is provided to the amplifier so that the amplifier operates as a low-noise amplifier to amplify the received signal.

Various embodiments of the present invention provide a method which includes (a) determining whether a station operating in an Orthogonal Frequency Division Multiple Access (OFDMA) network is to transmit a signal or to receive a signal; (b) when it is determined by said determining that the station is to transmit a signal, providing the signal to an amplifier employed in a transceiver of the station so that the amplifier acts as a power amplifier to amplify the signal to be transmitted and transmitting the amplified signal; and (c) when it is determined by said determining that the station is to receive a signal, providing the signal after it is received by the transceiver to the amplifier so that the amplifier acts as a low-noise amplifier to amplify the received signal.

Various embodiments of the present invention provide an apparatus including (a) a transceiver including an amplifier operating as a power amplifier when amplifying a signal to be transmitted by the transceiver and as a low-noise amplifier when amplifying a signal received by the transceiver; and (b) means for providing a signal to be transmitted by the transceiver to the amplifier so that the amplifier operates as a power amplifier to amplify the signal before being transmitted by the transceiver, and for providing a signal received by the transceiver to the amplifier so that the amplifier operates as a low-noise amplifier to amplify the received signal.

Various embodiments of the present invention provide a transceiver including (a) an amplifier; and (b) switching circuitry switching the transceiver to a first configuration in which a signal to be transmitted by the transceiver is provided to the amplifier so that the amplifier amplifies the signal before being transmitted, and to a second configuration in which a signal received by the transceiver is provided to the amplifier so that the amplifier amplifies the received signal.

The above embodiments of the present invention are simply examples, and all embodiments of the present invention are not limited to these examples.

Additional aspects of the invention will be set forth in part in the description which follows, and, in part, will be obvious from the description, or may be learned by practice of the invention. Preferred features of the present invention will now be described, purely by way of example, with reference to the accompanying drawings, in which:-

Fig. 1 is an illustration of a single-input/single-output switched RF transceiver, according to an embodiment of the present invention.

Fig. 2 is an illustration of a multiple-input/multiple-output architecture with switched RF transceivers, according to an embodiment of the present invention.

Fig. 3 is a flowchart illustrating the method of providing a signal to an amplifier employed in a transceiver of a relay station operating an Orthogonal Frequency Division Multiple Access (OFDMA), according to an embodiment of the present invention, according to an embodiment of the present invention.

### DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to like elements throughout.

Various embodiments of the present invention provide a switchable architecture of a front end RF transceiver for a relay station operating in an Orthogonal Frequency Division Multiple Access (OFDMA) network. The architecture is switchable between a first configuration in which an amplifier operates as a power amplifier to amplify a signal to be transmitted by the transceiver and a second configuration in which the amplifier acts as a low-noise amplifier to amplify a signal received by the transceiver. In this manner, the amplifier is capable of remaining always ON while the transceiver is switching between the first and second configurations, thereby allowing the amplifier to be used for two different applications while decreasing the switching time.

An amplifier is defined as operating as a power amplifier when the amplifier is in the last stage of amplification in the transmit signal path. Amplifiers operating as power amplifiers are well known.

An amplifier is defined as operating as a low-noise amplifier when the amplifier is in the first stage of amplification in the receive signal path. Amplifiers operating as low-noise amplifiers are well known.

As an example, in various embodiments of the present invention, an amplifier operating as a low-noise amplifier might have a noise figure of 2 dB or less. However, the present invention is not limited to any particular noise figure.

In this manner, an amplifier of the various embodiments of the present invention is capable of operating as either a power amplifier or a low-noise amplifier in a transceiver that is switching between a first configuration in which the transceiver is to transmit a signal and a second configuration in which the transceiver receives a signal.

In a conventional system, a single amplifier is configured as either a power amplifier or as a low-noise amplifier. Therefore, as described in the Background of the Related Art section of the application, a dedicated, separate amplifier is configured as a power amplifier to amplify a signal to be transmitted, and a dedicated, separate amplifier is configured as a low-noise amplifier to amplify a received signal. This use of separate amplifiers is significantly different than utilizing a single amplifier in a transceiver, whereby the amplifier operates as a power amplifier when the transceiver is configured to transmit a signal and operates as a low-noise amplifier when the transceiver is configured to receive a signal, as in various embodiments of the present invention.

Various embodiments of the present invention provide a transceiver architecture that includes a single amplifier that can be operate as a power amplifier and a low-noise amplifier, while allowing the amplifier to remain always ON while the transceiver is switching from a transmit configuration to a receive configuration and from a receive configuration to a transmit configuration. By allowing the amplifier to remain always ON, the switching time of the transceiver between a transmit configuration and a receive configuration can be decreased. The biasing of the amplifier is preferably fixed. In some embodiments, the biasing of the amplifier could be changed between the amplifier operating as a power amplifier and a low-noise amplifier in order to improve performance when in these different operating states. However, embodiments of the present invention are not limited to any particular biasing of the amplifier.

Various embodiments the present invention provide an RF transceiver architecture that allows a seamless integration of relay stations in an OFDMA network, in particular a network the Institute of Electrical and Electronics Engineers (IEEE) 802.16 standard, which includes any subsections of this standard, without degrading the performance or functionality of a base station or mobile station operating within the network.

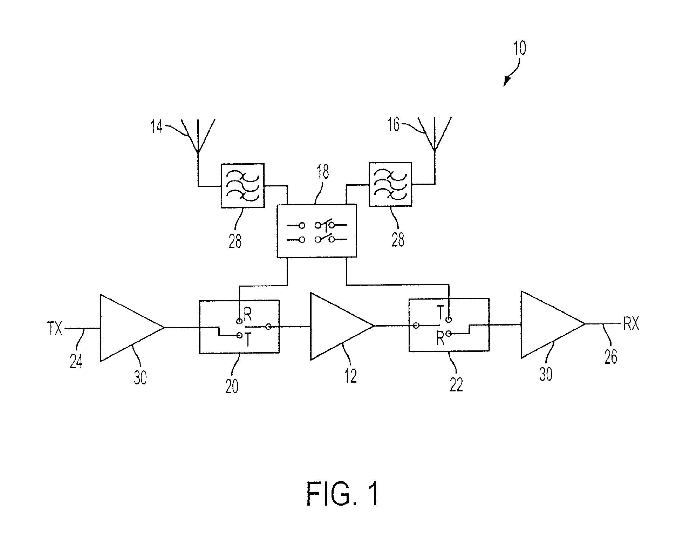

Fig. 1 is an illustrative example of a single-input/single-output switched RF transceiver 10 according to various embodiments of the present invention. The transceiver 10 utilizes an amplifier 12. This transceiver architecture will allow amplifier 12 to remain always ON, with amplifier 12 operating as a power amplifier when the switching circuitry of the transceiver is in a first configuration in which a signal to be transmitted by the transceiver is provided to the amplifier and as a low-noise amplifier in receive mode when the switching circuitry of the transceiver is in a second configuration in which a signal received by the transceiver is provided to the amplifier.

As an example of a possible amplifier for use as amplifier 12, amplifier 12 could be an EPA 480C from Excelics Semiconductor Inc. Of course, the present invention is not limited to amplifier 12 being any particular model number made by any particular manufacturer. Instead, there are many different manufactures and model numbers that can be used as an amplifier in embodiments of the present invention.

In various embodiments of the present invention, a transceiver 10 has a transmit antenna 14 and a receive antenna 16. However, the present invention is not limited to a transceiver having only two antennas, but can include any number of antennas for transmitting and receiving signals, or only a single antenna that is used to both transmit and receive.

Furthermore, the switching circuitry includes a connector switch 18 connected between transmit antenna 14 and receive antenna 16, a first transmit/receive (TR) switch 20 connected between amplifier 12 and connector switch 18, and a second transmit/receive (TR) switch 22 connected between amplifier 12 and connector switch 18. Connector switch 18 is, for example, a double pole, double throw (DPDT) switch. However, the present invention is not limited to only a single DPDT switch, but can include any number of switches of any type for routing signals through the antenna or antennas of the transceiver.

First TR switch 20 and second TR switch 22 are each switchable between a "T" position corresponding to a first configuration, in which a signal to be transmitted by the transceiver is provided to the amplifier, and an "R" position corresponding to a second configuration, in which a signal received by the transceiver is provided to the amplifier. However, the present invention is not limited to only two TR switches that are switchable between a "T" position and an "R" position, but can include any number of switches that are capable of being configured for both a first configuration, in which a signal to be transmitted by the transceiver is provided to the amplifier, and a second configuration, in which a signal received by the transceiver is provided to the amplifier.

When, for example, the transceiver is in a first configuration, in which a signal to be transmitted by the transceiver is provided to the amplifier, first TR switch 20 and second TR switch 22 are configured such that a signal to be transmitted by transceiver 10 is routed from amplifier 12 to transmit antenna 14 via connector switch 18. In the first configuration, amplifier 12 acts as a power amplifier to amplify a signal input at the transmit terminal 24 and to be transmitted through use of transmit antenna 14. However, the present invention is not limited to this configuration, but can include any configuration in which a signal to be transmitted is passed through the amplifier to a transmitting antenna.

When, for example, the transceiver is in a second configuration, in which a signal received by the transceiver is provided to the amplifier, first TR switch 20 and second TR switch 22 are configured such that a signal received by transceiver 10 through receive antenna 16 is routed to amplifier 12 via connector switch 18. In the second configuration, amplifier 12 acts as a low-noise amplifier to amplify a signal received through receive antenna 16 to be transmitted through the receive terminal 26 of transceiver 10. Since transceiver 10 is set at a given moment of time as either a receiver or a transmitter, any local interference in the transmit terminal/receive terminal path is avoided. However, the present invention is not limited to this configuration, but can include any configuration in which a signal received by the transceiver is passed through the amplifier to a receiving terminal.

In various embodiments of the present invention, band pass filters 28 can be disposed between connector switch 18 and each of transmit antenna 14 and receive antenna 16. In various embodiments of the present invention, additional amplifiers 30 can be disposed at each the transmit terminal 24 and receive terminal 26 of transceiver 10. However, the present invention is not limited to these configurations.

Fig. 1 is only an illustrative example of a single-input/single-output (SISO) switched RF transceiver utilizing an amplifier and switching circuitry. The various embodiments of the present invention are not limited to a SISO transceiver including two antennas, a connector switch, two transmit/receive (TR) switches, a transmit terminal, and a receive terminal as illustrated in Fig. 1, but may, for example, include any transceiver architecture including an amplifier that operates as a power amplifier and a low-noise amplifier and switching circuitry switchable between a first configuration in which a signal to be transmitted by the transceiver is provided to the amplifier so that the amplifier operates as a power amplifier to amplify the signal before being transmitted and a second configuration in which a signal received by the transceiver is provided to the amplifier so that the amplifier operates as a low-noise amplifier to amplify the received signal.

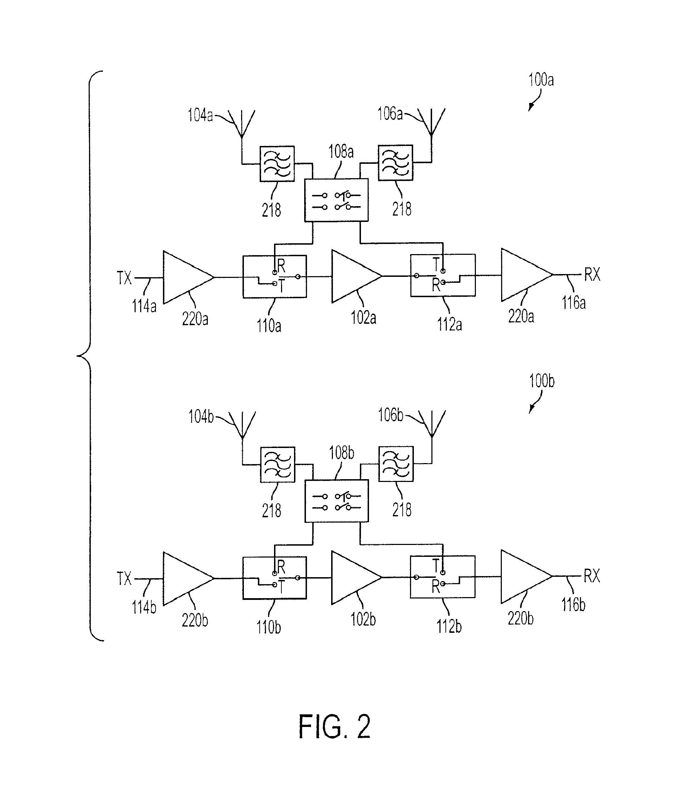

Fig. 2 is an illustrative example of a multiple-input/multiple-output architecture using switched RF transceivers 100a, 100b according to various embodiments of the present invention. Each transceiver 100a, 100b utilizes an amplifier 102a, 102b. Each transceiver architecture will allow amplifiers 102a, 102b to remain always ON, with amplifiers 102a, 102b each acting as a power amplifier when the switching circuitry of the transceiver is in a first configuration in which a signal to be transmitted by the transceiver is provided to the amplifier and as a low-noise amplifier in receive mode when the switching circuitry of the transceiver is in a second configuration in which a signal received by the transceiver is provided to the amplifier. Furthermore, it should be realized a multiple-input/multiple-output architecture utilizing four inputs and four outputs is a simple extrapolation of the case illustrated in Fig. 2.

In various embodiments of the present invention, a first transceiver 100a has a transmit antenna 104a and a receive antenna 106a. However, the present invention is not limited to a transceiver having only two antennas, but can include any number of antennas for transmitting and receiving signals, or only a single antenna that is used to both transmit and receive.

Furthermore, the switching circuitry includes a connector switch 108a connected between transmit antenna 104a and receive antenna 106a, a first transmit/receive (TR) switch 110a connected between amplifier 102a and connector switch 108a, and a second transmit/receive (TR) switch 112a connected between amplifier 102a and connector switch 108a. Connector switch 108a is, for example, a double pole, double throw (DPDT) switch. However, the present invention is not limited to only a single DPDT switch, but can include any number of switches of any type for routing signals through the antenna or antennas of the transceiver.

First TR switch 110a and second TR switch 112a are each switchable between a "T" position corresponding to a first configuration, in which a signal to be transmitted by the transceiver is provided to the amplifier, and a "R" position corresponding to a second configuration, in which a signal received by the transceiver is provided to the amplifier. However, the present invention is not limited to only two TR switches that are switchable between a "T" position and an "R" position, but can include any number of switches that are capable of being configured for both a first configuration, in which a signal to be transmitted by the transceiver is provided to the amplifier, and a second configuration, in which a signal received by the transceiver is provided to the amplifier.

When, for example, the transceiver is in a first configuration, in which a signal to be transmitted by the transceiver is provided to the amplifier, first TR switch 110a and second TR switch 112a are each configured to a "T" position such that a signal to be transmitted by first transceiver 100a is routed from amplifier 102a to transmit antenna 104a via connector switch 108a. In the first configuration, amplifier 102a acts as a power amplifier to amplify a signal input at the transmit terminal 114a and to be transmitted through use of transmit antenna 104a. However, the present invention is not limited to this configuration, but can include any configuration in which a signal to be transmitted is passed through the amplifier to a transmitting antenna.

When, for example, the transceiver is in a second configuration, in which a signal received by the transceiver is provided to the amplifier, first TR switch 110a and second TR switch 112a are each configured to an "R" position such that a signal received by the first transceiver 100a through receive antenna 106a is routed to amplifier 102a via connector switch 108a. In the second configuration, amplifier 102a acts as a low-noise amplifier to amplify a signal received through receive antenna 106a to be transmitted through the receive terminal 116a of first transceiver 100a. Since first transceiver 100a is switched and, therefore, set at a given moment of time as either a receiver or a transmitter, any local interference in the transmit terminal/receive terminal path is avoided. However, the present invention is not limited to this configuration, but can include any configuration in which a signal received by the transceiver is passed through the amplifier to a receiving terminal.

In various embodiments of the present invention, a second transceiver 100b has a transmit antenna 104b and a receive antenna 106b. However, the present invention is not limited to a transceiver having only two antennas, but can include any number of antennas for transmitting and receiving signals, or possibly only a single antenna that is used to both transmit and receive.

Furthermore, the switching circuitry includes a connector switch 108b connected between transmit antenna 104b and receive antenna 106b, a first transmit/receive (TR) switch 110b connected between amplifier 102b and connector switch 108b, and a second transmit/receive (TR) switch 112b connected between amplifier 102b and connector switch 108b. Connector switch 108b is, for example, a double pole, double throw (DPDT) switch. However, the present invention is not limited to only a single DPDT switch, but can include any number of switches of any type for routing signals through the antenna or antennas of the transceiver.

First TR switch 110b and second TR switch 112b are each switchable between a "T" position corresponding to a first configuration, in which a signal to be transmitted by the transceiver is provided to the amplifier, and a "R" position corresponding to a second configuration, in which a signal received by the transceiver is provided to the amplifier.
However, the present invention is not limited to only two TR switches that are switchable between a "T" position and an "R" position, but can include any number of switches that are capable of being configured for both a first configuration, in which a signal to be transmitted by the transceiver is provided to the amplifier, and a second configuration, in which a signal received by the transceiver is provided to the amplifier.

During, for example, a transmit mode, first TR switch 110b and second TR switch 112b are each configured to a "T" position such that a signal to be transmitted by second transceiver 100b is routed from amplifier 102b to transmit antenna 104b via connector switch 108b. In transmit mode, amplifier 102b acts as a power amplifier to amplify a signal input at the transmit terminal 114b and to be transmitted through use of transmit antenna 104b. However, the present invention is not limited to this configuration, but can include any configuration in which a signal to be transmitted is passed through the amplifier to a transmitting antenna.

During a receive mode, first TR switch 110b and second TR switch 112b are each configured to an "R" position such that a signal received by second transceiver 100b through receive antenna 106b is routed to amplifier 102b via connector switch 108b. In receive mode, amplifier 102b acts as a low-noise amplifier to amplify a signal received through receive antenna 106b to be transmitted through receive terminal 116b of second transceiver 100b. Since second transceiver 100b is switched and, therefore, set at a given moment of time as either a receiver or a transmitter, any local interference in the transmit terminal/receive terminal path is avoided. However, the present invention is not limited to this configuration, but can include any configuration in which a signal received by the transceiver is passed through the amplifier to a receiving terminal.

In various embodiments of the present invention, band pass filters 218 can be disposed between connector switches 108a, 108b and each of transmit antennas 104a, 104b and receive antennas 106a, 106b. In various embodiments of the present invention, additional amplifiers 220a, 220b can be disposed at each the transmit terminals 114a, 114b and receive terminals 116a, 116b of transceivers 100a, 100b. However, the present invention is not limited to these configurations.

Fig. 2 is only an illustrative example of multiple-input/multiple-output (MIMO) switched RF transceivers utilizing amplifiers and switching circuitry. The various embodiments of the present invention are not limited to transceivers each including two antennas, a connector switch, two transmit/receive (TR) switches, a transmit terminal, and a receive terminal as illustrated in Fig. 2, but may, for example, include any transceiver architecture including an amplifier that operates as a power amplifier and a low-noise amplifier and switching circuitry switchable between a first configuration in which a signal to be transmitted by the transceiver is provided to the amplifier so that the amplifier operates as a power amplifier to amplify the signal before being transmitted and a second configuration in which a signal received by the transceiver is provided to the amplifier so that the amplifier operates as a low-noise amplifier to amplify the received signal.

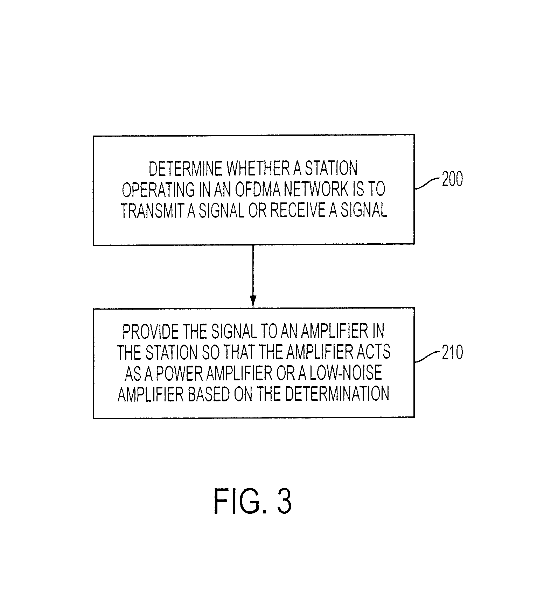

Fig. 3 is a flowchart illustrating a procedure of providing a signal to an amplifier employed in a transceiver of a relay station operating an Orthogonal Frequency Division Multiple Access (OFDMA), according to an embodiment of the present invention. Referring now to Fig. 3, in operation 200, it is determined whether a station operating in an Orthogonal Frequency Division Multiple Access (OFDMA) network is to transmit a signal or receive a signal.

From operation 200, the process moves to operation 210, where an amplifier employed in a transceiver of the station operates as a power amplifier or a low-noise amplifier based on the determination. When it is determined that the station is to transmit a signal, the signal is provided to the amplifier employed in the transceiver of the station so that the amplifier acts as a power amplifier to amplify the signal to be transmitted and the amplified signal is transmitted. When it is determined that the station is to receive a signal, the signal is provided, after it is received by the transceiver, to the amplifier so that the amplifier acts as a low-noise amplifier to amplify the received signal.

The present invention relates to the hardware architecture of RF transceivers in relay stations acting in OFDMA networks, and in particular, 802.16 networks. However, the present invention is not limited to relay stations or to any specific types of networks or to any specific standards, and the method and apparatus of the transceiver and transceiver architecture could be applied in various different types of transceiver applications. For example, the present invention is not limited to OFDMA networks or to 802.16 networks. Moreover, the present invention can be employed in stations other than relay stations.

In various embodiments of the present invention, an amplifier of a transceiver is described as operating as a "power amplifier" when used to amplify a signal to be transmitted, and as a "low noise amplifier" when used to amplify a received signal. However, embodiments of the present invention is not limited to the amplifier being used as a "power amplifier" or a "low noise amplifier". Instead, according to embodiments of the present invention, the configuration of a transceiver can be switched to position the amplifier in a transmit path of a signal that is to be transmitted, and to position the amplifier in a receive path of a received signal. More specifically, various embodiments of the present invention provide a transceiver including (a) an amplifier; and (b) switching circuitry switching the transceiver to a first configuration in which a signal to be transmitted by the transceiver is provided to the amplifier so that the amplifier amplifies the signal before being transmitted, and to a second configuration in which a signal received by the transceiver is provided to the amplifier so that the amplifier amplifies the received signal. In such embodiments, the amplifier may or may not be operating as a "power amplifier" when amplifying a signal to be transmitted, and may or may not be operating as a "low noise amplifier" when amplifying a received signal.

Although a few preferred embodiments of the present invention have been shown and described, it would be appreciated by those skilled in the art that changes may be made in these embodiments without departing from the principles and spirit of the invention, the scope of which is defined in the claims and their equivalents.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A transceiver comprising:
an amplifier operating as a power amplifier when amplifying a signal to be transmitted by the transceiver and as a low-noise amplifier when amplifying a signal received by the transceiver; and
switching circuitry switchable to a first configuration in which a signal to be transmitted by the transceiver is provided to the amplifier so that the amplifier operates as a power amplifier to amplify the signal before being transmitted, and to a second configuration in which a signal received by the transceiver is provided to the amplifier so that the amplifier operates as a low-noise amplifier to amplify the received signal.

2. A transceiver as recited in claim 1, wherein the amplifier remains ON when the switching circuitry switches from the first configuration to the second configuration, and from the second configuration to the first configuration.

3. The transceiver of claim 1 or 2, wherein the transceiver is incorporated into a relay station operating in an Orthogonal Frequency Division Multiple Access (OFDMA) network.

4. The transceiver of claim 3, wherein the OFDMA network is a network under the Institute of Electrical and Electronics Engineers (IEEE) 802.16 standard.

5. The transceiver of any of the preceding claims, further comprising:
a first antenna acting as a transmit antenna and a second antenna acting as a receive antenna.

6. The transceiver of claim 5, wherein the switching circuitry comprises:
a connector switch connected between the transmit antenna and the receive antenna;
a first transmit/receive (TR) switch connected between the amplifier and the connector switch; and
a second transmit/receive (TR) switch connected between the amplifier and the connector switch, wherein
in the first configuration, the first TR switch and the second TR switch are configured such that a signal to be transmitted is routed from the amplifier to the transmit antenna via the connector switch, and
in the second configuration, the first TR switch and the second TR switch are configured such that a signal received from the receive antenna is routed to the amplifier via the connector switch.

7. A method comprising:
determining whether a station operating in an Orthogonal Frequency Division Multiple Access (OFDMA) network is to transmit a signal or to receive a signal;
when it is determined by said determining that the station is to transmit a signal, providing the signal to an amplifier employed in a transceiver of the station so that the amplifier acts as a power amplifier to amplify the signal to be transmitted and transmitting the amplified signal; and
when it is determined by said determining that the station is to receive a signal, providing the signal after it is received by the transceiver to the amplifier so that the amplifier acts as a low-noise amplifier to amplify the received signal.

8. The method of claim 7, wherein the station is a relay station operating in an Institute of Electrical and Electronics Engineers (IEEE) 802.16 system.

9. An apparatus comprising:
a transceiver including an amplifier operating as a power amplifier when amplifying a signal to be transmitted by the transceiver and as a low-noise amplifier when amplifying a signal received by the transceiver; and
means for providing a signal to be transmitted by the transceiver to the amplifier so that the amplifier operates as a power amplifier to amplify the signal before being transmitted by the transceiver, and for providing a signal received by the transceiver to the amplifier so that the amplifier operates as a low-noise amplifier to amplify the received signal.

10. The apparatus of claim 9, further comprising:
a first antenna acting as a transmit antenna and a second antenna acting as a receive antenna.

11. The apparatus of claim 10, wherein the means comprises:
a connector switch connected between the transmit antenna and the receive antenna;
a first transmit/receive (TR) switch connected between the amplifier and the connector switch; and
a second transmit/receive (TR) switch connected between the amplifier and the connector switch, wherein
when a signal to be transmitted by the transceiver is provided to the amplifier, the first TR switch and the second TR switch are configured such that the signal is routed from the amplifier to the transmit antenna via the connector switch, and
when a signal received by the transceiver is to be provided to the amplifier, the first TR switch and the second TR switch are configured such that the signal is received from the receive antenna and then routed to the amplifier via the connector switch.

12. The apparatus of claim 9, 10 or 11, wherein the amplifier remains ON when the transceiver switches from receiving a signal to transmitting a signal, and from transmitting a signal to receiving a signal.

13. The apparatus of any of the preceding apparatus claims, wherein the apparatus is a relay station operating in an Institute of Electrical and Electronics Engineers (IEEE) 802.16 system.

14. A transceiver comprising:
an amplifier; and
switching circuitry switching the transceiver to a first configuration in which a signal to be transmitted by the transceiver is provided to the amplifier so that the amplifier amplifies the signal before being transmitted, and to a second configuration in which a signal received by the transceiver is provided to the amplifier so that the amplifier amplifies the received signal.

15. The transceiver of claim 14, wherein the amplifier remains ON when the switching circuitry switches from the first configuration to the second configuration, and from the second configuration to the first configuration.

16. The transceiver of claim 14 or 15, wherein the transceiver is incorporated into a relay station operating in an Orthogonal Frequency Division Multiple Access (OFDMA) network.

17. The transceiver of claim 16, wherein the OFDMA network is a network under the Institute of Electrical and Electronics Engineers (IEEE) 802.16 standard.

18. A transceiver comprising:
an amplifier; and
means for switching the transceiver to a first configuration in which a signal to be transmitted by the transceiver is provided to the amplifier so that the amplifier amplifies the signal before being transmitted, and to a second configuration in which a signal received by the transceiver is provided to the amplifier so that the amplifier amplifies the received signal.
